# FASCICULE DE BREVET EUROPEEN

(11) **EP 2 898 616 B1**
(45) Date de publication et mention de la délivrance du brevet: **15.11.2017**
(21) Numéro de dépôt: 13774750.7
(22) Date de dépôt: 18.09.2013
(51) Int. Cl.: H04J 14/02

(54) **PROCEDE ET DISPOSITIF DE GENERATION DE SIGNAUX ELECTRIQUES CORRESPONDANT A UNE LONGUEUR D'ONDE A PARTIR DE SIGNAUX OPTIQUES POLY-CHROMATIQUES**
VERFAHREN UND VORRICHTUNG ZUR ERZEUGUNG ELEKTRISCHER SIGNALE ENTSPRECHEND EINER WELLENLÄNGE AUS POLYCHROMATISCHEN OPTISCHEN SIGNALEN
METHOD AND DEVICE FOR GENERATING ELECTRICAL SIGNALS CORRESPONDING TO A WAVELENGTH, FROM POLYCHROMATIC OPTICAL SIGNALS

(30) Priorité: 21.09.2012 FR 1258902
(43) Date de publication de la demande: 29.07.2015
(73) Titulaire: Orange, 75015 Paris (FR)
(72) Inventeur: CHANCLOU, Philippe, F-22300 Lannion (FR); SALIOU, Fabienne, F-22300 Lannion (FR); LE GUYADER, Bertrand, F-22450 Pommerit Jaudy (FR)
(86) Numéro de dépôt international: PCT/FR2013/052151
(87) Numéro de publication internationale: WO 2014/044969

(56) Documents cités:
- KAZUTAKA HARA ET AL: "Flexible load balancing technique using dynamic wavelength bandwidth allocation (DWBA) toward 100Gbit/s-class-WDM/TDM-PON", 36TH EUROPEAN CONFERENCE AND EXHIBITION ON OPTICAL COMMUNICATION : (ECOC 2010) ; TORINO, ITALY, 19 - 23 SEPTEMBER 2010, IEEE, PISCATAWAY, NJ, USA, 19 septembre 2010 (2010-09-19), pages 1-3, XP031789580, ISBN: 978-1-4244-8536-9

## Description

### 1. Domaine de l'invention

La demande d'invention se situe dans le domaine des réseaux optiques passifs desservant des abonnés à des services de communications électroniques, et plus particulièrement dans celui des réseaux optiques passifs à multiplexage de longueur d'onde.

### 2. Etat de la technique antérieure

Les réseaux de distribution optique (ODN - optical distribution network, en anglais) sont déployés par les opérateurs de communication électronique dans le but de servir tous les clients potentiels d'une zone. Le nombre d'abonnés effectif est souvent très en deçà du potentiel, ce qui incite à mutualiser plusieurs ODN sur une même interface optique d'un terminal de ligne optique (OLT - Optical Line Termination, en anglais) au central et ce afin d'améliorer le taux de remplissage de l'interface optique de l'OLT et ainsi de limiter les coûts d'investissement et de fonctionnement pour l'opérateur.

Dans le cas des ODN utilisant la technologie des réseaux optiques passifs (PON - Passive Optical Network, en anglais) combinant un multiplexage par le temps (TDM - Time Division Multiplexing, en anglais) et un multiplexage en longueur d'onde (WDM - Wavelength Division Multiplexing, en anglais), les signaux optiques montant (des abonnés vers le central) comportent plusieurs longueurs d'onde et plusieurs fenêtres temporelles. Une fenêtre temporelle est connue de l'homme du métier sous sa désignation anglaise "burst". Lorsque plusieurs fibres optiques, correspondant chacune à un ODN, arrivent sur un même OLT, il faut extraire de chaque fibre chacune des longueurs d'onde pour les regrouper et reconstruire un signal correspondant à chaque longueur d'onde composée de différents bursts.

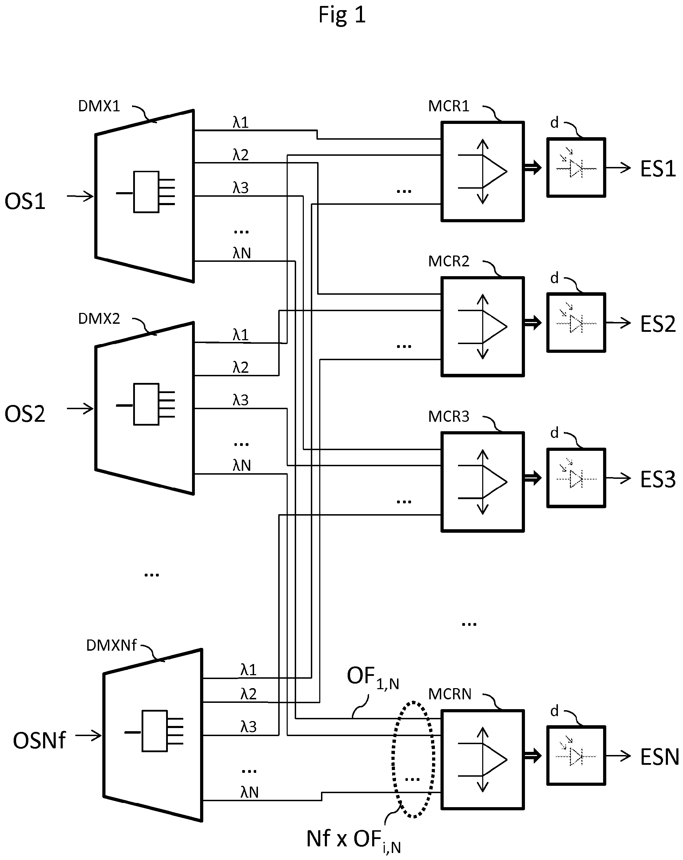

La figure 1 illustre une solution connue pour un système à N longueurs d'onde regroupant Nf réseaux ODN. Typiquement un système WDM gère par exemple N=64 ou 128 longueurs d'ondes. Selon le taux de remplissage en abonnés par réseau ODN, un opérateur peut souhaiter mutualiser jusqu'à Nf=4 réseaux ODN. Cette solution comporte les étapes suivantes:
- pour chaque signal optique OSi (i = 1 à Nf) en entrée, extraction d'autant de signaux optiques monochromatiques (c'est-à-dire à une seule longueur d'onde λj) que de longueurs d'onde dans le signal optique en entrée, et insertion des signaux sur autant de fibres optiques OF_{i,j} en sortie, par exemple à l'aide d'un démultiplexeur de longueur d'onde DMXi,
- pour chaque longueur d'onde λj, couplage des fibres optiques correspondantes OF_{i,j} issues des démultiplexeurs de longueur d'onde DMXi, et insertion par exemple dans un coupleur MCRj (j = 1 à N) comprenant une photodiode d en sortie, afin de générer un signal électrique ESj dédiée à une seule longueur d'onde λj.

Cette technique permet donc de mutualiser plusieurs ODN sur un OLT au moyen de plusieurs composants optiques supplémentaires. Selon cette technique, le signal montant d'un réseau ODN passe d'abord à travers un démultiplexeur DMX qui l'extrait de la fibre optique, est ensuite divisé pour être réinséré dans N fibres optiques intermédiaires, puis le signal de chaque fibre optique intermédiaire passe au travers d'un coupleur MCR qui l'extrait et le combine avec Nf - 1 autres signaux optiques, avant une conversion finale en un signal électrique.

Le passage des signaux à travers ces composants optiques supplémentaires et ces fibres optiques intermédiaires est une source importante de pertes optiques nuisant à la qualité, voire à la disponibilité du service pour les abonnés. Ces pertes optiques sont typiquement de 4dB pour un démultiplexeur de l'ordre de 1 dB pour un coupleur.

Le document "Flexible load balancing technique using dynamic wavelength bandwidth allocation (DWBA) toward 100Gbit/s class WDM/TDM PON", 36th European conférence and exhibition on optical communication (ECOC 2010, Turin, Italie, 19-23 septembre 2010), IEEE, ISBN 978-1-4244-8536-9, pages 1-3, se rapporte à un réseau optique de type WDM-PON dans lequel une pluralité d'ODN sont associés et connectés à un seul OLT, mais n'élimine pas les inconvénients précités.

Un des buts de l'invention est de remédier à des inconvénients de l'état de la technique.

### 3. Exposé de l'invention

L'invention vient améliorer la situation à l'aide d'un procédé de génération d'une pluralité de signaux électriques à partir de signaux optiques poly-chromatiques extraits d'un ensemble de fibres optiques, un signal optique poly-chromatique comprenant une pluralité de longueurs d'onde déterminées, un signal électrique étant généré par longueur d'onde déterminée, comprenant :
- une étape de regroupement de signaux optiques extraits en un faisceau de signaux optiques poly-chromatiques,
- une étape de séparation du faisceau de signaux poly-chromatiques en une pluralité de faisceaux de signaux optiques monochromatiques,
- une étape de conversion de la pluralité de faisceaux de signaux optiques monochromatiques séparés en la pluralité de signaux électriques.

Pour un nombre Nf de fibres optiques en entrée, transportant chacune des signaux modulés sur un nombre N de longueurs d'onde, tel que par exemple les N longueurs d'onde d'un système WDM, le procédé permet de générer en sortie N signaux électriques sans qu'il n'y ait de passage intermédiaire au travers de Nf x N fibres optiques additionnelles entre l'entrée et la sortie.

Les signaux des Nf fibres entrantes sont d'abord regroupés avant d'être séparés en N longueurs d'onde. Les opérations de démultiplexage en longueur d'onde, effectuées pour chacune des fibres optiques en entrée selon la technique antérieure, sont ainsi évitées. A la place, le procédé sépare en N longueurs d'onde un seul faisceau de signaux. Le regroupement des fibres entrantes peut utiliser un guide d'onde avec ou sans fibre optique intermédiaire. La séparation en N longueurs d'onde ne nécessite pas le recours à des fibres optiques intermédiaires. On comprend que les Nf x N fibres optiques intermédiaires de la technique antérieure ne sont plus nécessaires selon l'invention, ou sont remplacées par au plus une fibre optique.

Le procédé permet donc de connecter à un même équipement de terminaison de ligne OLT, dans le sens montant (des abonnés vers le central), un nombre Nf de réseau de distribution optique ODN utilisant N longueurs d'onde, tout en évitant les pertes dues aux insertions/extractions de signaux optiques dans des fibres optiques intermédiaires.

Allant à l'encontre des pratiques courantes s'appliquant aux systèmes WDM isolés ou aux systèmes WDM-TDM isolés, avant l'émergence du besoin de les combiner entre eux, le procédé inverse les opérations de séparation et regroupement des longueurs d'onde.

En effet, la technique antérieure conduit l'homme de métier à effectuer l'opération de regroupement après l'opération d'obtention de chacune des longueurs d'ondes de chacune des fibres optiques en entrée du procédé. Notamment, les coupleurs optiques connus, tels que par exemple le module MCR du "GPON MCBOX" de chez Huawei¹, ou le coupleur "MCR G-PON SFP OLT" de chez Neophotonics², ne sont capables de traiter qu'une seule longueur d'onde à la fois, ce qui nécessite au préalable de dé-multiplexer en longueurs d'onde le signal optique de chaque fibre. Aucun dispositif connu ne combine donc, dans cet ordre ou un autre, une fonction de multiplexage multimodale (étape de regroupement), une fonction de traitement de la longueur d'onde (étape de séparation) et une fonction de réception optoélectronique (étape de conversion) de signaux TDM et WDM provenant de différentes fibres monomodes.
¹ Marque commerciale protégée
² Marque commerciale protégée

Selon un aspect de l'invention, l'étape de séparation comprend une étape de passage du faisceau de signaux poly-chromatiques au travers d'une pluralité de lames de verre avec traitement multicouche, disposées en cascade, une lame de verre filtrant une des longueurs d'onde déterminées et réfléchissant les autres longueurs d'onde, pour former un faisceau de signaux optiques monochromatiques.

La technique de la lame de verre à traitement multicouche, ("thin film coating filter dedicated to one wavelength", en anglais) présente l'avantage de présenter des pertes faibles: de l'ordre d'1 dB par lame, lorsque 8 lames sont disposées en cascade pour un système à 8 longueurs d'onde, par exemple. Cette technique est particulièrement adaptée lorsque l'espacement entre les longueurs d'onde est supérieur à 20 nm.

Selon un aspect de l'invention, l'étape de séparation comprend une étape de réflexion du faisceau de signaux poly-chromatiques dans un réseau diffractif émettant les faisceaux de signaux optiques monochromatiques selon une pluralité d'angles de diffraction propres à leur longueur d'onde.

La technique du réseau diffractif ("grating filter", en anglais) présente l'avantage de présenter des pertes faibles: de l'ordre de 4 dB, pour un système à 8 longueurs d'onde, par exemple. Cette technique est particulièrement adaptée lorsque l'espacement entre les longueurs d'onde est de l'ordre de 0,8 nm.

Selon un aspect de l'invention, l'étape de regroupement comprend une étape de superposition des signaux optiques extraits dans un guide d'onde multi-mode.

En superposant les signaux optiques préalablement à l'extraction des longueurs d'ondes, en sortie de fibres monomode ou multi-modes, il est possible d'utiliser un seul guide d'onde multi-mode, ce qui permet les traitements subséquents par des composants en optique intégrée, limitant les pertes optique car permettant de limiter le nombre de dioptres que traverse la lumière.

Selon un aspect de l'invention, l'étape de regroupement comprend une étape d'élargissement du faisceau obtenu par optique en espace libre.

Redimensionner le faisceau de signaux optiques poly-chromatiques permet de l'adapter à la taille du module de séparation tout en utilisant des composants optiques en espace libre, comme par exemple des lentilles de collimation. La mise en oeuvre de composants en espace libre permet la réalisation de dispositifs sans effort technologique important, permettant donc des coûts inférieurs, au moins pour un faible nombre de dispositifs.

Selon un aspect de l'invention, l'étape de conversion comprend une étape de focalisation du faisceau obtenu par optique en espace libre.

Redimensionner le faisceau de signaux optiques poly-chromatiques permet de l'adapter à la taille des photodiodes utilisées pour la conversion, tout en utilisant des composants optiques en espace libre, comme par exemple des lentilles de focalisation. La mise en oeuvre de composants en espace libre permet la réalisation de dispositifs sans effort technologique important, permettant donc des coûts inférieurs, au moins pour un faible nombre de dispositifs.

Selon un aspect de l'invention, les étapes de regroupement et de séparation sont réalisées par des composants d'optique intégrée, et en ce que l'étape de séparation comprend une étape de passage du faisceau de signaux poly-chromatiques au travers d'une pluralité de lames de verre avec traitement multicouche, disposées en cascade, une lame de verre déviant une des longueurs d'onde déterminées pour former un faisceau de signaux optiques monochromatiques, et filtrant les autres longueurs d'onde.

Lorsque tous les composants mettant en oeuvre le procédé sont en optique intégrée, le maximum d'efficacité en termes de minimisation des pertes est atteint. Cet aspect permet également de maintenir la dimension des faisceaux optique à une taille minimale, ce qui évite devoir refocaliser le faisceau pour l'adapter à l'étape de conversion.

Les différents aspects du procédé qui viennent d'être décrits peuvent être mis en oeuvre indépendamment les uns des autres ou en combinaison les un avec les autres.

L'invention concerne aussi un dispositif de génération d'une pluralité de signaux électriques à partir de signaux optiques poly-chromatiques extraits d'un ensemble de fibres optiques, un signal optique poly-chromatique comprenant une pluralité de longueurs d'onde déterminées, un signal électrique étant généré par longueur d'onde déterminée, comprenant :
- un module de regroupement de signaux optiques extraits en un faisceau de signaux optiques poly-chromatiques,
- un module de séparation du faisceau de signaux poly-chromatiques en une pluralité de faisceaux de signaux optiques monochromatiques,
- un module de conversion de la pluralité de faisceaux de signaux optiques monochromatiques séparés en la pluralité de signaux électriques.

L'invention concerne enfin un module de réception de terminal optique de ligne, comprenant le dispositif de génération d'une pluralité de signaux électriques qui vient d'être décrit.

### 4. Présentation des figures

D'autre avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :
- la figure 1 présente un exemple de configuration d'un système de couplage de fibres optiques à plusieurs longueurs d'onde, selon la technique antérieure,
- la figure 2 présente un exemple de mise en oeuvre du procédé de génération d'une pluralité de signaux électriques à partir de signaux optiques poly-chromatiques extraits d'un ensemble de fibres optiques, selon un premier mode de réalisation de l'invention,

- la figure 3 présente un exemple de mise en oeuvre du même procédé, selon un deuxième mode de réalisation de l'invention,
- la figure 4 présente un exemple de structure d'un dispositif de génération d'une pluralité de signaux électriques à partir de signaux optiques poly-chromatiques extraits d'un ensemble de fibres optiques, selon un aspect de l'invention,
- la figure 5 présente un mode de réalisation d'un module de regroupement de signaux optiques en un faisceau de signaux optiques poly-chromatiques, selon un aspect de l'invention,
- la figure 6 présente un autre mode de réalisation d'un module de regroupement de signaux optiques en un faisceau de signaux optiques poly-chromatiques, selon un aspect de l'invention,
- la figure 7 présente un mode de réalisation d'un module de séparation d'un faisceau de signaux poly-chromatiques en une pluralité de faisceaux de signaux optiques monochromatiques, selon un aspect de l'invention,
- la figure 8 présente un mode de réalisation d'un module de conversion d'une pluralité de faisceaux de signaux optiques monochromatiques en une pluralité de signaux électriques, selon un aspect de l'invention.

### 5. Description détaillée d'au moins un mode de réalisation de l'invention

Dans la suite de la description, on présente plusieurs modes de réalisation de l'invention dans le cas de réseaux optiques passifs (PON) à multiplexage temporel (TDM) et de longueur d'onde (WDM), à fibres monomodes ou multi-modes, mais l'invention s'applique également à des schémas de protection pour les systèmes de transmission WDM autorisant la mutualisation ou la redondance.

La **figure 1****,** présentant un exemple de configuration d'un système de couplage de fibres optiques à plusieurs longueurs d'onde, selon la technique antérieure, a été décrite précédemment.

Dans les exemples suivants de mise en oeuvre du procédé de génération d'une pluralité de signaux électriques à partir de signaux optiques extraits d'un ensemble de fibres optiques, la valeur du nombre de réseaux ODN à mutualiser, et donc le nombre de signaux optiques poly-chromatiques en entrée, est fixée à 3, et la valeur du nombre de longueurs d'onde du système WDM est fixée à 4 (λ1, λ2, λ3, λ4), à des fins d'illustration.

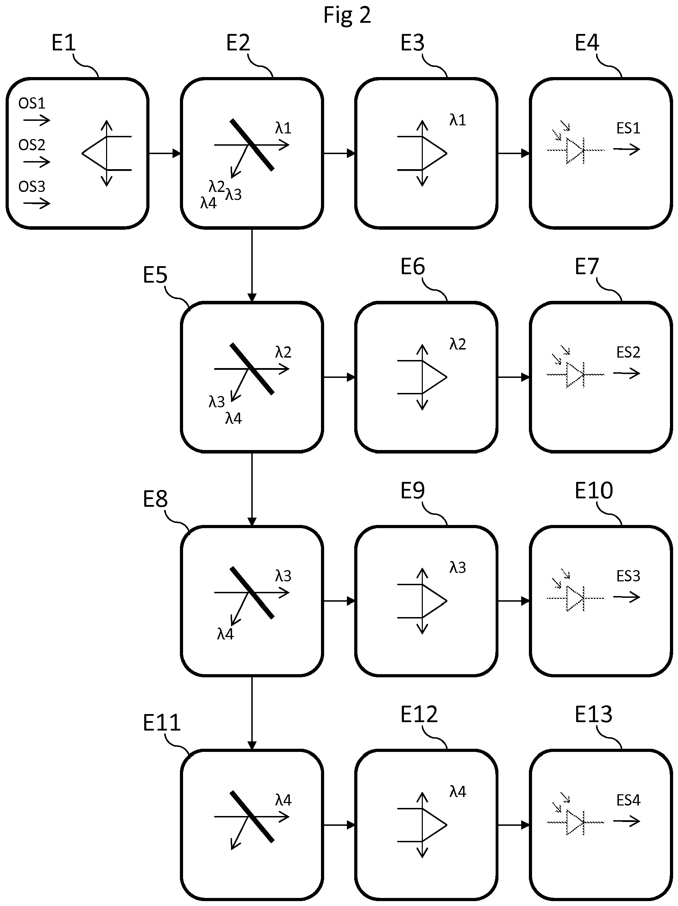

La **figure 2** présente un exemple de mise en oeuvre du procédé de génération d'une pluralité de signaux électriques à partir de signaux optiques poly-chromatiques extraits d'un ensemble de fibres optiques, selon un premier mode de réalisation de l'invention.

Lors d'une étape E1, chaque signal optique poly-chromatique OS1, OS2 et OS3 est élargi pour atteindre une taille donnée, par exemple à l'aide d'une lentille de collimation par signal, et les signaux optiques ainsi élargis sont disposés et regroupés en un faisceau de taille prédéterminée.

Lors d'une étape E2, le faisceau de signaux poly-chromatiques passe à travers un premier filtre optique réglé pour séparer la lumière de longueur d'onde λ1 du reste de la lumière du faisceau, filtre pour lequel la taille du faisceau a été prédéterminée. Ce filtre est par exemple une lame de verre à traitement multicouche dédié à la longueur d'onde λ1, laissant passer cette longueur d'onde et reflétant les autres.

Lors d'une étape E3, le faisceau monochromatique séparé, constitué par la lumière filtrée à longueur d'onde λ1, est focalisé pour réduire sa taille, par exemple à l'aide d'une lentille de focalisation pour chacun des rayons de lumière issus des signaux OSi.

Lors d'une étape E4, le faisceau focalisé est converti en un signal électrique ES1 par projection sur la surface sensible d'une photodiode.

Lors d'une étape E5, le faisceau reflété lors de l'étape E2 passe à travers un deuxième filtre optique réglé pour séparer la lumière de longueur d'onde λ2 du reste de la lumière du faisceau. Ce filtre est par exemple une lame de verre à traitement multicouche dédié à la longueur d'onde λ2, laissant passer cette longueur d'onde et reflétant les autres.

Lors d'une étape E6, le faisceau monochromatique séparé, constitué par la lumière filtrée à longueur d'onde λ2, est focalisé pour réduire sa taille, par exemple à l'aide d'une lentille de focalisation pour chacun des rayons de lumière issus des signaux OSi.

Lors d'une étape E7, le faisceau focalisé est converti en un signal électrique ES2 par projection sur la surface sensible d'une photodiode.

Lors d'une étape E8, le faisceau reflété lors de l'étape E5 passe à travers un troisième filtre optique réglé pour séparer la lumière de longueur d'onde λ3 du reste de la lumière du faisceau. Ce filtre est par exemple une lame de verre à traitement multicouche dédié à la longueur d'onde λ3, laissant passer cette longueur d'onde et reflétant les autres.

Lors d'une étape E9, le faisceau monochromatique séparé, constitué par la lumière filtrée à longueur d'onde λ3, est focalisé pour réduire sa taille, par exemple à l'aide d'une lentille de focalisation pour chacun des rayons de lumière issus des signaux OSi.

Lors d'une étape E10, le faisceau focalisé est converti en un signal électrique ES3 par projection sur la surface sensible d'une photodiode.

Lors d'une étape E11, le faisceau reflété lors de l'étape E8 passe à travers un quatrième filtre optique réglé pour séparer la lumière de longueur d'onde λ4 du reste de la lumière du faisceau. Ce filtre est par exemple une lame de verre à traitement multicouche dédié à la longueur d'onde λ4, laissant passer cette longueur d'onde et reflétant les autres.

Lors d'une étape E12, le faisceau monochromatique séparé, constitué par la lumière filtrée à longueur d'onde λ4, est focalisé pour réduire sa taille par exemple à l'aide d'une lentille de focalisation pour chacun des rayons de lumière issus des signaux OSi.

Lors d'une étape E13, le faisceau focalisé est converti en un signal électrique ES4 par projection sur la surface sensible d'une photodiode.

Dans une variante avantageuse de ce premier mode de réalisation, l'étape E1 est remplacée par deux étapes E1a et E1b, non illustrées, et les étapes E3, E6, E9 et E12 sont remplacées respectivement par des étapes E3b, E6b, E9b et E12b, non illustrées, les étapes E2, E4, E5, E7, E8, E10, E11 et E13, ainsi que l'enchainement des étapes restant identiques.

Lors d'une étape E1a, les signaux optiques poly-chromatiques OS1, OS2 et OS3 sont superposés dans une guide d'onde multi-mode, par exemple une fibre optique multi-mode.

Lors d'une étape E1b, le signal superposé extrait du guide d'onde multi-mode est élargi pour atteindre une taille déterminée, par exemple à l'aide d'une seule lentille de collimation, plutôt que trois dans le cas de l'étape E1.

De même, puisque la superposition a créé un seul rayon de lumière, cette variante permet de n'utiliser qu'une seule lentille de focalisation au lieu de trois, lors de chacune des étapes subséquentes E3b, E6b, E9b et E12b.

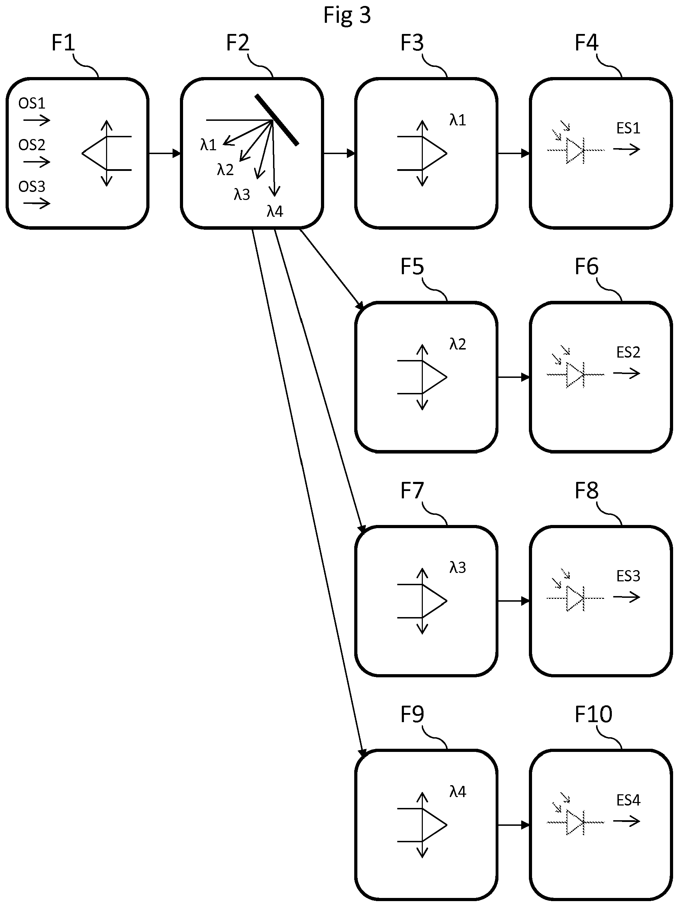

La **figure 3** présente un exemple de mise en oeuvre du procédé de génération d'une pluralité de signaux électriques à partir de signaux optiques poly-chromatiques extraits d'un ensemble de fibres optiques, selon un deuxième mode de réalisation de l'invention.

Lors d'une étape F1 similaire à l'étape E1, chaque signal optique poly-chromatique OS1, OS2 et OS3 est élargi pour atteindre une taille donnée, par exemple à l'aide d'une lentille de collimation par signal, et les signaux optiques ainsi élargis sont disposés et regroupés en un faisceau poly-chromatique de taille prédéterminée.

Lors d'une étape F2, le faisceau de signaux poly-chromatiques est reflété par un filtre optique réglé pour séparer la lumière de chacune des longueurs d'onde λ1, λ2, λ3 et λ4 en autant de faisceaux de signaux optiques mono-chromatiques, filtre pour lequel la taille du faisceau poly-chromatique a été prédéterminée. Ce filtre est par exemple un réseau diffractif reflétant les faisceaux mono-chromatiques selon des angles d'incidence dépendant de leur longueur d'onde.

Lors d'une étape F3 similaire à l'étape E3, le faisceau monochromatique séparé, constitué par la lumière filtrée à longueur d'onde λ1, est focalisé pour réduire sa taille, par exemple à l'aide d'une lentille de focalisation pour chacun des rayons de lumière issus des signaux OSi.

Lors d'une étape F4 similaire à l'étape E4, le faisceau focalisé est converti en un signal électrique ES1 par projection sur la surface sensible d'une photodiode.

Les étapes F5 et F6, F7 et F8, et F9 et F10 se déroulent parallèlement aux étapes F3 et F4, étapes auxquelles elles sont identiques sauf qu'elles s'appliquent respectivement aux faisceaux séparés de longueurs d'onde λ2, λ3 et λ4, et génèrent respectivement les signaux électriques ES2, ES3 et ES4.

Dans une variante avantageuse de ce deuxième mode de réalisation, l'étape F1 est remplacée par deux étapes F1 a et F1 b, non illustrées, et les étapes F3, F5, F7 et F9 sont remplacées respectivement par des étapes F3b, F5b, F7b et F9b, non illustrées, les étapes F2, F4, F6, F8, et F10, ainsi que l'enchainement des étapes restant identiques.

Lors d'une étape F1a, les signaux optiques poly-chromatiques OS1, OS2 et OS3 sont superposés dans une guide d'onde multi-mode, par exemple une fibre optique multi-mode.

Lors d'une étape F1b, le signal superposé extrait du guide d'onde multi-mode est élargi pour atteindre une taille déterminée, par exemple à l'aide d'une seule lentille de collimation, plutôt que trois dans le cas de l'étape F1.

De même, puisque la superposition a créé un seul rayon de lumière, cette variante permet de n'utiliser qu'une seule lentille de focalisation au lieu de trois, lors de chacune des étapes subséquentes F3b, F5b, F7b et F9b.

Selon un troisième mode de réalisation de l'invention, non illustré, les signaux optiques poly-chromatiques OS1, OS2 et OS3, qu'ils soient issus de fibres monomode ou multi-modes, sont superposés dans une guide d'onde multi-mode, puis le guide d'onde multi-mode est traité en filtrage de longueur d'onde à l'aide de composant d'optique intégrée, sans passer par des composants optiques en espace libre utilisés dans les deux premiers modes de réalisation qui viennent d'être décrits. Ce troisième mode présente l'avantage d'éviter les pertes de signal liées au passage des faisceaux en espace libre.

Par exemple, le faisceau poly-chromatique, ainsi superposé et guidé, passe au travers de quatre lames de verre avec traitement multicouche, disposées en cascade, déviant la lumière respectivement de longueurs d'onde λ1, λ2, λ3 et λ4 vers la surface sensible de quatre photodiodes pour générer respectivement les signaux électriques ES1, ES2, ES3 et ES4.

Les dispositifs en optiques intégrés sont principalement basés sur la technologie AWG ("Arrayed Waveguide Grating" en anglais). Cette solution intègre des fonctions de guidage, de diffraction, de modification de la phase optique et d'interférence.

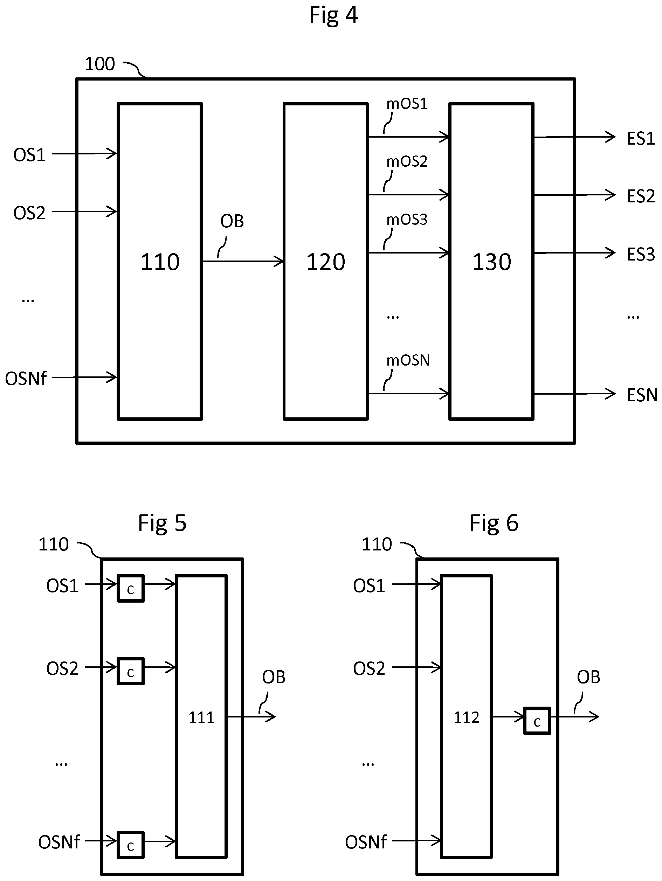

En relation avec la **figure 4****,** on présente maintenant un exemple de structure d'un dispositif de génération d'une pluralité de signaux électriques à partir de signaux optiques extraits d'un ensemble de fibres optiques, selon un aspect de l'invention.

Le dispositif 100 de génération d'une pluralité de signaux électriques met en oeuvre le procédé de génération d'une pluralité de signaux électriques tel que décrit ci-dessus.

Un tel dispositif 100 peut être intégré dans un module de réception d'un équipement de terminaison de ligne optique. Le dispositif 100 peut également être mis en oeuvre dans un équipement distinct de l'équipement de terminaison de ligne optique, dans un équipement du réseau dédié ou non à la réception de signaux d'un réseau de distribution optique.

Par exemple, le dispositif 100 comprend les modules suivants:
- Un module 110 de regroupement, apte à regrouper les signaux optiques OSi (i = 1 à Nf) en un faisceau optique OB,
- Un module 120 de séparation, apte à séparer le faisceau optique OB en signaux optiques monochromatiques mOSj (j = 1 à N), chacun correspondant à une longueur d'onde déterminée,
- Un modules 130 de conversion, apte à convertir des signaux optiques mOSj en autant de signaux électriques ESj.

La **figure 5** présente un mode de réalisation du module 110 de regroupement. Dans ce mode le module 110 comprend par exemple les unités suivantes:
- Des unités c de collimation, aptes à élargir chacun des signaux optiques OSi, issus de fibres optiques, à l'aide de lentilles de collimation,
- Une unité 111 de regroupement, apte à regrouper les signaux optiques élargis en un faisceau optique (OB).

La **figure 6** présente un autre mode de réalisation du module 110 de regroupement. Dans ce mode le module 110 comprend par exemple les unités suivantes:
- Une unité 112 de regroupement, apte à regrouper les signaux optiques OSi, issus de fibres optiques, en un faisceau optique OB,
- une unité c de collimation, apte à élargir le faisceau optique OB, à l'aide d'une lentille de collimation.

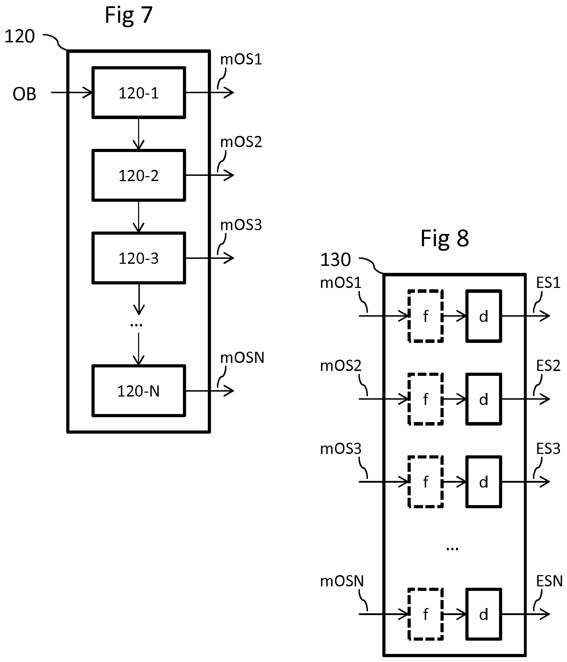

La **figure 7** présente un mode de réalisation du module 120 de séparation. Dans ce mode le module 120 comprend par exemple des unités 120-j (j = 1 à N) de séparation, disposées en cascade, chacune étant apte à séparer du signal entrant une longueur d'onde λj déterminée pour former un signal monochromatique mOSj.

La **figure 8** présente un mode de réalisation du module 130 de conversion. Dans ce mode le module 130 comprend par exemple des unités de photodiode d, aptes à convertir les signaux optiques mOSj (j = 1 à N) entrants en un signal électrique ESj.

En variante de ce mode de réalisation, le module 130 de conversion comprend en outre des unités de focalisation f, aptes à rétrécir les signaux optiques mOSj entrants afin de les adapter à la surface réceptrice des unités de photodiode d.

Les modules et unités décrits en relation avec les figures 4 à 8 peuvent être des modules ou unités matériels.

Les exemples de réalisation de l'invention qui viennent d'être présentés ne sont que quelques uns des modes de réalisation envisageables. Ils montrent que l'invention permet de mutualiser dans un seul équipement central OLT la gestion du sens montant de plusieurs de réseaux de distribution optiques WDM, lorsque le nombre effectifs d'abonnés est inférieur à la capacité prévue sur chaque réseau, sans avoir recours à des traitements ou des transports optiques intermédiaires qui sont sources importantes de pertes de signal.

## Revendications

1. **Procédé** de génération d'une pluralité de signaux électriques (ES1, ES2, ES3, ES4, ESN) à partir de signaux optiques poly-chromatiques (OS1, OS2, OS3, OSNf) extraits d'un ensemble de fibres optiques, un signal optique poly-chromatique comprenant une pluralité de longueurs d'onde déterminées (λ1, λ2, λ3, λ4), un signal électrique étant généré par longueur d'onde déterminée, **caractérisé en ce qu'**il comprend:
• une étape de regroupement (E1; F1) de signaux optiques extraits en un faisceau (OB) de signaux optiques poly-chromatiques,
• une étape de séparation (E2, E5, E8, E11; F2) du faisceau de signaux poly-chromatiques en une pluralité de faisceaux de signaux optiques monochromatiques (mOS1, mOS2, mOS3, mOSN),
• une étape de conversion (E3, E4, E6, E7, E9, E10, E12, E13; F3, F4, F5, F6, F7, F8, F9, F10) de la pluralité de faisceaux de signaux optiques monochromatiques séparés en la pluralité de signaux électriques.

2. **Procédé** de génération d'une pluralité de signaux électriques, selon la revendication 1, **caractérisé en ce que** l'étape de séparation (E2, E5, E8) comprend une étape de passage du faisceau de signaux poly-chromatiques au travers d'une pluralité de lames de verre avec traitement multicouche, disposées en cascade, une lame de verre filtrant une des longueurs d'onde déterminées et réfléchissant les autres longueurs d'onde, pour former un faisceau de signaux optiques monochromatiques.

3. **Procédé** de génération d'une pluralité de signaux électriques, selon la revendication 1, **caractérisé en ce que** l'étape de séparation (F2) comprend une étape de réflexion du faisceau de signaux poly-chromatiques dans un réseau diffractif émettant les faisceaux de signaux optiques monochromatiques selon une pluralité d'angles de diffraction propres à leur longueur d'onde.

4. **Procédé** de génération d'une pluralité de signaux électriques, selon la revendication 2 ou 3, **caractérisé en ce que** l'étape de regroupement (E1; F1) comprend une étape de superposition des signaux optiques extraits dans un guide d'onde multi-mode.

5. **Procédé** de génération d'une pluralité de signaux électriques, selon la revendication 2 ou 3, **caractérisé en ce que** l'étape de regroupement (E1; F1) comprend une étape d'élargissement du faisceau obtenu par optique en espace libre.

6. **Procédé** de génération d'une pluralité de signaux électriques, selon la revendication 2 ou 3, **caractérisé en ce que** l'étape de conversion (E4, E7, E10, E13; F4, F6, F8, F10) comprend une étape de focalisation (E3, E6, E9, E12; F3, F5, F7, F9) du faisceau obtenu par optique en espace libre.

7. **Procédé** de génération d'une pluralité de signaux électriques, selon la revendication 1, **caractérisé en ce que** les étapes de regroupement (E1; F1) et de séparation (E2, E5, E8, E11; F2) sont réalisées par des composants d'optique intégrée, et **en ce que** l'étape de séparation comprend une étape de passage du faisceau de signaux poly-chromatiques au travers d'une pluralité de lames de verre avec traitement multicouche, disposées en cascade, une lame de verre déviant une des longueurs d'onde déterminées pour former un faisceau de signaux optiques monochromatiques, et filtrant les autres longueurs d'onde.

8. **Dispositif** (100) de génération d'une pluralité de signaux électriques (ES1, ES2, ES3, ES4, ESN) à partir de signaux optiques poly-chromatiques (OS1, OS2, OS3, OSNf), un signal optique poly-chromatique comprenant une pluralité de longueurs d'onde déterminées (λ1, λ2, λ3, λ4), un signal électrique étant généré par longueur d'onde déterminée, **caractérisé en ce qu'**il comprend:
• un module de regroupement (110; c, 111; 112, c) de signaux optiques en un faisceau de signaux optiques poly-chromatiques,
• un module de séparation (120; 120-1, 120-2, 120-3, 120-N) du faisceau de signaux poly-chromatiques en une pluralité de faisceaux de signaux optiques monochromatiques (mOS1, mOS2, mOS3, mOSN),
• un module de conversion (130; d; f, d) de la pluralité de faisceaux de signaux optiques monochromatiques séparés en la pluralité de signaux électriques.

9. **Module de réception de terminal optique de ligne, caractérisé en ce qu'**il comprend un dispositif (100) de génération d'une pluralité de signaux électriques selon la revendication 8.

## Patentansprüche

1. Verfahren zur Erzeugung einer Vielzahl elektrischer Signale (ES1, ES2, ES3, ES4, ESN) aus polychromatischen optischen Signalen (OS1, OS2, OS3, OSNf), die aus einem Satz optischer Fasern extrahiert werden, wobei ein polychromatisches optisches Signal eine Vielzahl bestimmter Wellenlängen (λ1, λ2, λ3, λ4) umfasst, wobei ein elektrisches Signal durch eine bestimmte Wellenlänge erzeugt wird, **dadurch gekennzeichnet, dass** es Folgendes umfasst:
• einen Schritt der Umgruppierung (E1; F1) extrahierter optischer Signale, in einem Bündel (OB) polychromatischer optischer Signale,
• einen Schritt der Trennung (E2, E5, E8, E11; F2) des Bündels polychromatischer Signale in eine Vielzahl von Bündeln monochromatischer optischer Signale (mOS1, mOS2, mOS3, mOSN),
• einen Schritt der Umwandlung (E3, E4, E6, E7, E9, E10, E12, E13; F3, F4, F5, F6, F7, F8, F9, F10) der Vielzahl getrennter Bündel monochromatischer optischer Signale in die Vielzahl elektrischer Signale.

2. Verfahren zur Erzeugung einer Vielzahl elektrischer Signale nach Anspruch 1, **dadurch gekennzeichnet, dass** der Schritt der Trennung (E2, E5, E8) einen Schritt des Durchlaufens des Bündels polychromatischer Signale durch eine Vielzahl von als Kaskade angeordneten Glasplättchen mit Mehrschichtbehandlung umfasst, wobei ein Glasplättchen eine der bestimmten Wellenlängen filtert und die anderen Wellenlängen reflektiert, um ein Bündel monochromatischer optischer Signale zu bilden.

3. Verfahren zur Erzeugung einer Vielzahl elektrischer Signale nach Anspruch 1, **dadurch gekennzeichnet, dass** der Schritt der Trennung (F2) einen Schritt der Reflexion des Bündels polychromatischer Signale in einem Beugungsnetz umfasst, das die Bündel monochromatischer optischer Signale in einer Vielzahl von Beugungswinkeln, die ihrer Wellenlänge eigen sind, aussendet.

4. Verfahren zur Erzeugung einer Vielzahl elektrischer Signale nach Anspruch 2 oder 3, **dadurch gekennzeichnet, dass** der Schritt der Umgruppierung (E1; F1) einen Schritt der Überlagerung der optischen Signale umfasst, die in einem multimodalen Wellenleiter extrahiert werden.

5. Verfahren zur Erzeugung einer Vielzahl elektrischer Signale nach Anspruch 2 oder 3, **dadurch gekennzeichnet, dass** der Schritt der Umgruppierung (E1; F1) einen Schritt der Vergrößerung des erhaltenen Bündels durch optische Freiraumübertragung umfasst.

6. Verfahren zur Erzeugung einer Vielzahl elektrischer Signale nach Anspruch 2 oder 3, **dadurch gekennzeichnet, dass** der Schritt der Umwandlung (E4, E7, E10, E13; F4, F6, F8, F10) einen Schritt der Fokussierung (E3, E6, E9, E12; F3, F5, F7, F9) des erhaltenen Bündels durch optische Freiraumübertragung umfasst.

7. Verfahren zur Erzeugung einer Vielzahl elektrischer Signale nach Anspruch 1, **dadurch gekennzeichnet, dass** die Schritte der Umgruppierung (E1; F1) und der Trennung (E2, E5, E8, E11; F2) durch Komponenten einer integrierten Optik realisiert werden, und dass der Schritt der Trennung einen Schritt des Durchlaufens des Bündels polychromatischer Signale durch eine Vielzahl von als Kaskade angeordneten Glasplättchen mit Mehrschichtbehandlung umfasst, wobei ein Glasplättchen eine der bestimmten Wellenlängen ablenkt, um ein Bündel monochromatischer optischer Signale zu bilden, und die anderen Wellenlängen ausfiltert.

8. Vorrichtung (100) zur Erzeugung einer Vielzahl elektrischer Signale (ES1, ES2, ES3, ES4, ESN) aus polychromatischen optischen Signalen (OS1, OS2, OS3, OSNf), wobei ein polychromatisches optisches Signal eine Vielzahl bestimmter Wellenlängen (λ1, λ2, λ3, A4) umfasst, wobei ein elektrisches Signal durch eine bestimmte Wellenlänge erzeugt wird, **dadurch gekennzeichnet, dass** es Folgendes umfasst:
• ein Modul zur Umgruppierung (110; c, 111; 112, c) optischer Signale in einem Bündel polychromatischer optischer Signale,
• ein Modul zur Trennung (120; 120-1, 120-2, 120-3, 120-N) des Bündels polychromatischer Signale in eine Vielzahl von Bündeln monochromatischer optischer Signale (mOS1, mOS2, mOS3, mOSN),
• ein Modul zur Umwandlung (130; d; f, d) der Vielzahl getrennter Bündel monochromatischer optischer Signale in die Vielzahl elektrischer Signale.

9. Empfangsmodul des optischen Leitungsendgerätes, **dadurch gekennzeichnet, dass** es eine Vorrichtung (100) zur Erzeugung einer Vielzahl elektrischer Signale nach Anspruch 8 umfasst.

## Claims

1. **Method** for generating a plurality of electrical signals (ES1, ES2, ES3, ES4, ESN) from polychromatic optical signals (OS1, OS2, OS3, OSNf) extracted from a set of optical fibers, a polychromatic optical signal comprising a plurality of determined wavelengths (λ1, λ2, λ3, λ4), an electrical signal being generated for each determined wavelength, **characterized in that** it comprises:
• a step of grouping (E1; F1) extracted optical signals into a beam (OB) of polychromatic optical signals,
• a step of separating (E2, E5, E8, E11; F2) the beam of polychromatic signals into a plurality of beams of monochromatic optical signals (mOS1, mOS2, mOS3, mOSN),
• a step of converting (E3, E4, E6, E7, E9, E10, E12, E13; F3, F4, F5, F6, F7, F8, F9, F10) the plurality of separated monochromatic optical signal beams into the plurality of electrical signals.

2. **Method** for generating a plurality of electrical signals according to Claim 1, **characterized in that** the separation step (E2, E5, E8) comprises a step of passing the beam of polychromatic signals through a plurality of glass plates with multilayer treatment, arranged in cascade configuration, a glass plate filtering one of the determined wavelengths and reflecting the other wavelengths, to form a beam of monochromatic optical signals.

3. **Method** for generating a plurality of electrical signals according to Claim 1, **characterized in that** the separation step (F2) comprises a step of reflection of the beam of polychromatic signals in a grating filter emitting the beams of monochromatic optical signals according to a plurality of diffraction angles specific to their wavelength.

4. **Method** for generating a plurality of electrical signals according to Claim 2 or 3, **characterized in that** the grouping step (E1; F1) comprises a step of superposition of the extracted optical signals in a multimode waveguide.

5. **Method** for generating a plurality of electrical signals according to Claim 2 or 3, **characterized in that** the grouping step (E1; F1) comprises a step of widening of the beam obtained by optics in free space.

6. **Method** for generating a plurality of electrical signals according to Claim 2 or 3, **characterized in that** the conversion step (E4, E7, E10, E13; F4, F6, F8, F10) comprises a step of focusing (E3, E6, E9, E12; F3, F5, F7, F9) of the beam obtained by optics in free space.

7. **Method** for generating a plurality of electrical signals according to Claim 1, **characterized in that** the grouping (E1; F1) and separation (E2, E5, E8, E11; F2) steps are performed by integrated optical components, and **in that** the separation step comprises a step of passing of the beam of polychromatic signals through a plurality of glass plates with multilayer treatment, arranged in cascade configuration, a glass plate deflecting one of the determined wavelengths to form a beam of monochromatic optical signals, and filtering the other wavelengths.

8. **Device** (100) for generating a plurality of electrical signals (ES1, ES2, ES3, ES4, ESN) from polychromatic optical signals (OS1, OS2, OS3, OSNf), a polychromatic optical signal comprising a plurality of determined wavelengths (λ1, λ2, λ3, λ4), an electrical signal being generated for each determined wavelength, **characterized in that** it comprises:
• a module for grouping (110; c, 111; 112, c) optical signals into a beam of polychromatic optical signals,
• a module for separating (120; 120-1, 120-2, 120-3, 120-N) the beam of polychromatic signals into a plurality of beams of monochromatic optical signals (mOS1, mOS2, mOS3, mOSN),
• a module for converting (130; d; f, d) the plurality of beams of separated monochromatic optical signals into the plurality of electrical signals.

9. **Optical line terminal reception module, characterized in that** it comprises a device (100) for generating a plurality of electrical signals according to Claim 8.
